(19) Europäisches Patentamt / European Patent Office / Office européen des brevets

(11) **EP 2 806 555 B1**

(12) **FASCICULE DE BREVET EUROPEEN**

(45) Date de publication et mention
de la délivrance du brevet:
**12.07.2023 Bulletin 2023/28**

(21) Numéro de dépôt: **14305690.1**

(22) Date de dépôt: **12.05.2014**

(51) Classification Internationale des Brevets (IPC):
**H02P 21/18** $^{(2016.01)}$ **H02P 23/12** $^{(2006.01)}$

(52) Classification Coopérative des Brevets (CPC):
**H02P 23/12; H02P 21/18**

(54) **Procédé de détermination de la position et de la vitesse d'un rotor d'une machine électrique synchrone au moyen d'observateurs d'état**

Bestimmungsverfahren der Position und Geschwindigkeit eines Rotors einer elektrischen Maschine, die synchron mit den Zustandsbeobachtern läuft

Method for determining the position and speed of a rotor of a synchronous electric machine by means of status observers

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2013 FR 1354520**

(43) Date de publication de la demande:
**26.11.2014 Bulletin 2014/48**

(73) Titulaire: **IFP Energies nouvelles**
**92500 Rueil-Malmaison (FR)**

(72) Inventeur: **Dib, Wissam**
**92150 Suresnes (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 1 492 224 EP-A1- 1 959 553
WO-A2-2013/093223 FR-A1- 2 623 033
FR-A1- 2 781 318 GB-A- 1 214 331
US-A- 5 296 793 US-A1- 2010 237 817

• ALFIO CONSOLI ET AL: "Low- and Zero-Speed Sensorless Control of Synchronous Reluctance Motors", IEEE TRANSACTIONS ON INDUSTRY APPLICATIONS, IEEE SERVICE CENTER, PISCATAWAY, NJ, US, vol. 35, no. 5, 1 octobre 1999 (1999-10-01), XP011022630, ISSN: 0093-9994

**Description**

La présente invention concerne le domaine du contrôle des machines électriques synchrones, notamment pour véhicules automobiles.

Une machine synchrone se compose d'une partie tournante, le rotor, et d'une partie fixe, le stator. Le rotor peut se composer d'aimants permanents ou être constitué d'un bobinage alimenté en courant continu et d'un circuit magnétique, on parle alors d'électroaimant. Le stator comprend trois phases, sur chacune desquelles est connectée au moins une bobine (appelés aussi enroulements), ces trois bobines sont alimentées en courant et tension. On utilise une force extérieure pour faire tourner le rotor : un champ magnétique induit par un courant électrique alternatif dans des bobines (enroulements) du stator engendre une rotation du rotor. La vitesse de ce champ tournant est appelée « vitesse de synchronisme ».

Pour commander de telles machines électriques, il est nécessaire de connaître en temps réel la position angulaire et la vitesse du rotor. En effet, l'information de la position est utilisée par un moyen classique de contrôle vectoriel du couple de la machine. On parle de contrôle vectoriel car pour que la machine produise le couple requis par l'application, il faut maintenir les courants électriques y circulant en phase et synchronisés avec la position du rotor. Pour y parvenir, les moyens contrôle de la machine électrique appliquent des tensions aux bornes du moteur, ces tensions étant fournies par l'algorithme de contrôle en couple.

Pour connaître la position du rotor, il est d'usage d'utiliser des capteurs de position, par exemple du type à effet Hall ou inductif. Toutefois, les capteurs de position à bas coût ne sont pas suffisamment précis, notamment pour des vitesses de rotation élevées, et par conséquent ne permettent pas d'assurer un contrôle précis du couple de la machine électrique. De plus, ces capteurs peuvent subir des défaillances ou présenter du bruit de mesure, engendrant des incertitudes de mesure. L'utilisation d'un capteur de position est décrite, par exemple, dans la demande de brevet britannique GB 1 214 331A. Une autre possibilité est l'utilisation de capteurs de position précis, tels que des codeurs incrémentaux avec une grande résolution ou encore des capteurs absolus appelés résolveurs, les capteurs basés sur la détection d'un élément magnétique en rotation, ou basés sur un principe d'interférométrie optique, mais ils présentent l'inconvénient principal d'être onéreux.

Une autre solution de l'état de l'art est la reconstruction de la position du rotor en estimant à partir des mesures électriques une grandeur physique qui varie avec la position du rotor. Les estimations de la position peuvent être classées en deux grandes catégories :

- celles basées sur l'injection de signaux particuliers dans la commande de la machine électrique, qui nécessitent d'appliquer des tensions particulières aux bornes de la machine électrique pour pouvoir déterminer la position à partir des mesures électriques du moteur. Par exemple, la demande de brevet français FR 2 623 033 A1 décrit l'injection d'impulsions brèves dans deux phases non alimentées. L'injection de signaux particuliers implique des contraintes au niveau de la commande de la machine électrique, ces contraintes ne permettent pas de commander le moteur de manière optimale pendant son fonctionnement.
- celles ne nécessitant aucun signal particulier en entrée du moteur, qui ne se basent que sur une description mathématique de son comportement à l'aide d'un estimateur en temps réel aussi appelé observateur, mais qui ont l'inconvénient de ne pas délivrer une estimation précise lorsque le moteur est à régime de rotation quasi-nul ou faible. Par exemple le brevet français FR 2 781 318 B1 divulgue un procédé d'estimation de l'angle de rotation du rotor par calcul à partir de signaux fournis par des capteurs de tension. La demande de brevet américaine US 2010 237 817 A décrit, quant à elle, l'utilisation d'un observateur utilisant un modèle de force électromotrice équivalent.

Afin de palier les inconvénients des solutions précédentes, on connaît des solutions "hybrides" qui utilisent un capteur de position pour des faibles vitesses de rotation ainsi qu'une méthode d'estimation pour des vitesses élevées. Par exemple, la demande de brevet du demandeur WO13093223 A2 a été déposée le 20 novembre 2012 sous priorité d'une demande de brevet déposée le 20 décembre 2011 et a été publiée le 27 Juin 2013. Ce document décrit une telle solution hybride avec un algorithme permettant de déterminer la position et la vitesse du moteur pour des hauts régimes. Toutefois, ces solutions hybrides nécessitent toujours l'utilisation d'au moins un capteur pour les bas régimes de la machine électrique. De plus, les solutions de l'art antérieur ne présentent pas une précision suffisante pour la commande des machines électriques, en effet certaines solutions de l'art antérieur réalisent des approximations pour ensuite développer des observateurs, dits de Kalman. En outre, certains de ces observateurs nécessitent beaucoup de calculs complexes à réaliser.

Le document US 5,296,793 décrit un observateur d'état pour un moteur synchrone.

Le document EP 1959553 A1 décrit un dispositif de contrôle d'un moteur.

La présente invention propose d'utiliser un procédé de détermination de la position et de la vitesse du rotor de la machine électrique synchrone se basant sur un observateur d'état des courants de la machine électrique et sur l'injection de signaux. Ainsi, grâce à l'invention, l'information de la position est précise notamment à faible vitesse sans l'utilisation de capteur de position. En effet, l'injection de signaux rend le modèle décrivant la dynamique de la machine électrique observable, y compris à l'arrêt et robuste vis-à-vis du bruit de mesure.

**Le procédé et le système selon l'invention**

L'invention telle que décrite par la revendication 1 concerne un procédé de détermination de la position $\theta$ d'un rotor d'une machine électrique synchrone à pôles saillants, dans lequel on mesure les courants $i_m$ et les tensions $u_m$ des phases de ladite machine électrique.

Selon l'invention, le procédé est appliqué pour une vitesse de rotation du rotor inférieure ou sensiblement égale à 100 tr/min.

De manière avantageuse, ladite amplitude $U_c$ vaut sensiblement 10 V et ladite fréquence $f_c$ vaut sensiblement 1 kHz.

De préférence, la tension imposée $u_{imp}$ dans le plan complexe s'écrit par une formule du type : $u_{imp} = U_c e^{j\theta_c}$ avec j le nombre complexe, $\theta_c$ la position telle que $\dot{\theta}_c = 2\pi f_c$.

Selon un mode de réalisation de l'invention, on construit ladite modélisation d'état du flux magnétique $\chi_{\alpha\beta}$ total circulant dans la machine électrique est obtenue les étapes suivantes :

i) on détermine les tensions $u_{\alpha\beta}$ et courants $i_{\alpha\beta}$ dans le repère de Concordia par transformation des tensions $u_m$ et courants $i_m$ mesurés ;

ii) on détermine ledit la dynamique du flux magnétique $\chi_{\alpha\beta}$ par une équation du type : $\dot{\chi}_{\alpha\beta} = -R i_{\alpha\beta} + u_{\alpha\beta}$ avec R la résistance des enroulements de ladite machine électrique.

De manière avantageuse, on construit lesdits observateurs d'état des courants et de la vitesse du rotor au moyen des étapes suivantes :

i) on détermine une représentation d'état du courant $i_{\alpha\beta}$ à partir de ladite modélisation d'état dudit flux magnétique $\chi_{\alpha\beta}$ par une formule du type:

$$\dot{i}_{\alpha\beta} = -\sigma B \begin{pmatrix} \cos(\psi) & -\sin(\psi) \\ \sin(\psi) & \cos(\psi) \end{pmatrix} i_{\alpha\beta} + \sigma A Q(2\theta + \varphi) i_{\alpha\beta} + \frac{\Phi\omega}{\lambda - \eta} \begin{bmatrix} \sin\theta \\ -\cos\theta \end{bmatrix} + \frac{\lambda}{\lambda^2 - \eta^2} I u_{\alpha\beta} - \eta Q(2\theta) u_{\alpha\beta}$$

$$\lambda = \frac{(L_d + L_q)}{2} \quad \text{et} \quad \eta = \frac{(L_d - L_q)}{2}$$

avec $\Phi$ le flux créé par les aimants permanents de ladite machine électrique, , $(L_d, L_q)$ étant les inductances directe et en quadrature de ladite machine électrique,

$$Q(\cdot) = \begin{bmatrix} \cos(\cdot) & \sin(\cdot) \\ \sin(\cdot) & -\cos(\cdot) \end{bmatrix}, \qquad I = \begin{bmatrix} 1 & 0 \\ 0 & 1 \end{bmatrix}$$

et

$$\sigma = \frac{1}{\lambda^2 - \eta^2}, A = 4\lambda^2\eta^2\omega^2 + R^2\eta^2, B = 4\eta^4\omega^2 + R^2\lambda^2, \cos\psi = \frac{R\lambda}{B}, \sin\psi = \frac{2\omega\eta^2}{B},$$

$$\cos\varphi = \frac{R\eta}{A}, \sin\varphi = \frac{-2\omega\lambda\eta}{A};$$

ii) on transforme ladite représentation d'état dans le plan complexe en posant $x = i_\alpha + j i_\beta$ et $u = u_\alpha + j u_\beta$ avec j le nombre complexe ; et

iii) on détermine lesdits observateurs d'états du courant et de la vitesse du rotor par des équations du type :

$$\dot{\hat{x}} = j\hat{\omega}\hat{x} + (-k_1 + jk_2)(\hat{x} - y_n)$$
$$\dot{\hat{\omega}} = g \cdot \mathrm{Im}(\hat{x}\overline{(\hat{x} - y_n)})$$

$$y_n = \frac{x}{\|x\|}$$

avec $y_n = \dfrac{x}{\|x\|}$ étant les mesures de courants normalisés et $k_1, k_2, g$ des gains permettant de gérer la convergence dudit observateur.

En outre, on peut déterminer la position $\hat{\theta}$ dudit rotor au moyen des étapes suivantes :

i) on détermine un coefficient $\hat{c}_2$ à partir dudit observateur d'état de la vitesse $\hat{\omega}$ et de ladite tension imposée $u_{imp}$

$$\hat{c}_2 = \frac{jU_c L_1( 2\hat{\omega} - \omega_c )}{\omega_c(\lambda^2 - \eta^2)(\omega_c - 2\hat{\omega}) - R^2 + j2R\lambda(\omega_c - \frac{\hat{\omega}}{2})}$$

au moyen d'une équation du type :        avec $\omega_c = 2\pi f_c$ ;

et

ii) on détermine ladite position $\hat{\theta}$ dudit rotor au moyen du coefficient $\hat{c}_2$ et de courants x mesurés à partir d'une

$$\hat{\theta} = \frac{1}{2}(angle(x) - angle(\hat{c}_2) - \phi)$$

équation du type:        avec $\phi$ le déphasage induit par un filtrage passe bas de fréquence de coupure $f_c$ du courant estimé $\hat{x}$.

De plus, l'invention concerne un procédé de commande d'une machine électrique synchrone, pour lequel réalise les étapes suivantes :

- on détermine la position $\hat{\theta}$ et la vitesse $\hat{\omega}$ du rotor de ladite machine électrique au moyen du procédé selon le procédé tel que décrit ci-dessus ; et
- on commande le couple de ladite machine synchrone en fonction de la position et de la vitesse déterminées.

L'invention concerne également un système de commande décrit par la revendication 9 d'une machine électrique synchrone, adapté à appliquer le procédé de commande tel que décrit précédemment.

L'invention concerne aussi un véhicule, décrit par la revendication 10 notamment véhicule automobile hybride ou électrique, comprenant au moins une machine électrique synchrone, le véhicule comprend en outre un système de commande tel que décrit précédemment.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre le contrôle d'une machine électrique synchrone selon l'invention.
La figure 2 est un logigramme du procédé selon l'invention.

**Description détaillée de l'invention**

On rappelle que le procédé et le système selon l'invention sont adaptés à une machine électrique synchrone à pôles saillants. La machine électrique synchrone peut être du type à aimants permanents, à excitation commandé ou à double excitation. Une telle machine est composée d'une partie tournante le rotor, et d'une partie fixe le stator. La partie tournante comprend au moins un aimant (ou un électroaimant). Le stator comprend au moins trois bobines réparties sur trois phases, ces bobines sont alimentées alternativement de manière à générer un champ magnétique apte à faire tourner le rotor. Les bobines sont supportées par une carcasse, également appelé carter.

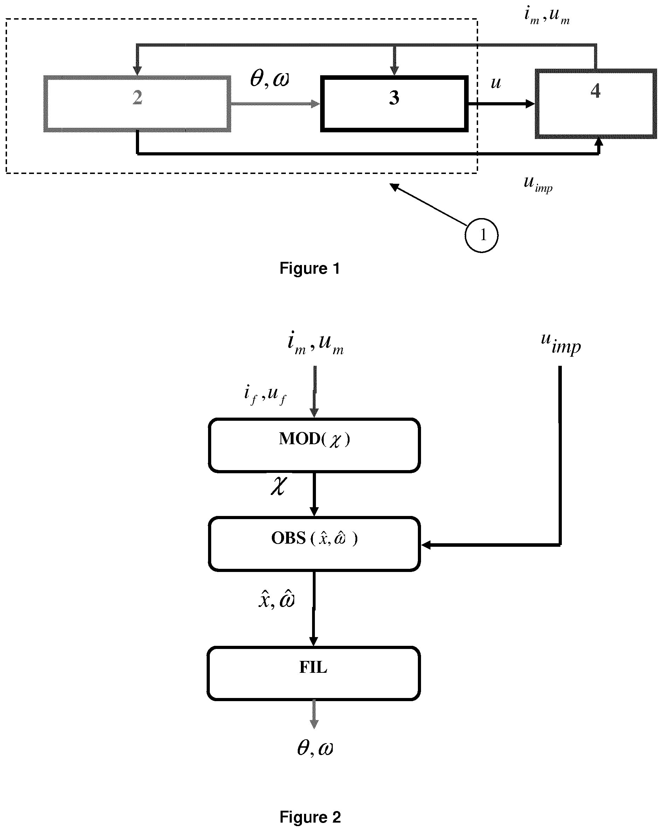

La figure 1 illustre le contrôle d'une machine électrique synchrone, constituée classiquement de trois phases. La machine électrique (4) est pourvue de moyens de mesure des courants et des tensions des phases, ces moyens de mesure ne sont pas représentés. Les moyens de contrôle (1) de la machine électrique sont constitués de moyens de détermination (2) de la position et de la vitesse du rotor de ladite machine électrique (4) et de moyens de contrôle du couple (3) de la machine électrique (4). Les moyens de détermination (2) de la position et de la vitesse du rotor déterminent la position et la vitesse du rotor à partir des mesures de courants $i_m$ et de tensions $u_m$. Il s'agit des courants et des tensions de chacune des trois phases de la machine électrique (4). Les moyens de contrôle du couple (3) appliquent des tensions aux bornes du moteur en fonction de la position $\theta$ et la vitesse $\omega$ et de courants $i_m$ et de tensions $u_m$ afin d'assurer une consigne de couple pour la machine électrique (4). Les moyens de détermination (2) imposent une tension $u_{imp}$ à la machine électrique (4).

En effet, pour le procédé selon l'invention, on injecte (impose) une tension $u_{imp}$ à la machine électrique. Cette tension possède une fréquence $f_c$ élevée de manière à ne pas influencer la commande du moteur ; la fréquence $f_c$ de la tension injectée est supérieure à la fréquence du signal de commande de la machine électrique : on peut écrire

l'inégalité suivante $\omega_c = 2\pi f_c >> \omega$. Par exemple, la fréquence $f_c$ de la tension injectée est de l'ordre de 1 kHz, la fréquence de rotation du rotor étant à bas régime de l'ordre de 50 Hz. L'injection de signaux rend le modèle observable, y compris à l'arrêt et le rend robuste vis-à-vis du bruit de mesure.

Par ailleurs, la tension imposée $u_{imp}$ possède une amplitude $U_c$ supérieure à l'amplitude de la tension de commande de la machine électrique. Par exemple, l'amplitude $U_c$ de la tension imposée $u_{imp}$ est de l'ordre de 10 V. Avec une telle fréquence $f_c$ et une telle amplitude $U_c$, la tension imposée $u_{imp}$ n'a pas d'influence sur la commande de la machine électrique et le fonctionnement de la machine électrique n'est pas perturbé, notamment quand la fréquence électrique de fonctionnement de la machine électrique est faible.

Notations :

Au cours de la description, les notations suivantes seront utilisées :

$u$ : tensions aux bornes des phases de la machine électrique.

$i$ : courants circulant dans les phases de la machine électrique.

$\theta$ : position du rotor, correspondant à l'angle de rotation du rotor de la machine électrique par rapport au stator.

$\omega$ : vitesse du rotor, correspondant à la vitesse de rotation du rotor de la machine électrique par rapport au stator.

$u_{imp}$ : tension imposée (injectée) à la machine électrique.

$U_c$ : amplitude de la tension imposée $u_{imp}$ à la machine électrique. On peut la choisir de l'ordre de 10 V.

$f_c$ : fréquence de la tension imposée $u_{imp}$ à la machine électrique. On peut la choisir de l'ordre de 1 kHz. On rappelle que $\omega_c = 2\pi f_c$.

$\chi$ : flux magnétique total vu par la machine électrique.

R : les résistances des enroulements de la machine électrique, il s'agit d'un paramètre connu (donnée constructeur) ou obtenue expérimentalement.

$L_d$ : inductance directe de ladite machine électrique, il s'agit d'un paramètre de la machine électrique qui est connu (donnée constructeur ou obtenu expérimentalement).

$L_q$ : inductance en quadrature de ladite machine électrique, il s'agit d'un paramètre de la machine électrique qui est connu (donnée constructeur ou obtenu expérimentalement).

$\Phi$ : flux magnétique créé par les aimants permanents de ladite machine électrique, il s'agit d'une donnée du constructeur ou pouvant être déterminée expérimentalement.

$x$ : représentation d'état du courant dans le plan complexe.

$\phi$ : déphasage induit par le filtre continu, ce déphasage, fonction du filtre est connu (dépend de la fréquence fondamentale du signal d'entrée).

$k_1$, $k_2$, $g$ : variables de calibration permettant de gérer la convergence de l'observateur d'état.

$c_1$, $c_2$, $a_1$ : variables de l'observateur d'état.

On pose également :

$$\lambda = \frac{(L_d + L_q)}{2}, \quad \eta = \frac{(L_d - L_q)}{2}, \quad Q(\cdot) = \begin{bmatrix} \cos(\cdot) & \sin(\cdot) \\ \sin(\cdot) & -\cos(\cdot) \end{bmatrix},$$

$$I = \begin{bmatrix} 1 & 0 \\ 0 & 1 \end{bmatrix}, \quad \sigma = \frac{1}{\lambda^2 - \eta^2}, \quad A = 4\lambda^2\eta^2\omega^2 + R^2\eta^2, \quad B = 4\eta^4\omega^2 + R^2\lambda^2, \quad \cos\psi = \frac{R\lambda}{B},$$

$$\sin\psi = \frac{2\omega\eta^2}{B}, \quad \cos\varphi = \frac{R\eta}{A}, \quad \sin\varphi = \frac{-2\omega\lambda\eta}{A}, \quad \gamma = \frac{-j\omega\Phi}{\lambda - \eta}, \quad \delta = \sigma\lambda, \quad \varepsilon = -\sigma\eta \text{ et}$$

$\alpha = -\sigma Be^{j\psi}$, $\beta = \sigma Ae^{j\varphi}$,

$$y_n = \frac{x}{\|x\|}.$$

Ces notations, indexées par la mention $_{-m}$, représentent les valeurs mesurées. Les valeurs estimées sont indiquées par un accent circonflexe. Les dérivées par rapport au temps sont indiquées par un point. Les notations indexées par la mention $_{-\alpha\beta}$ signifient que les grandeurs sont exprimées dans le repère de Concordia. j correspond au nombre complexe. Dans le plan complexe, le conjugué complexe d'une grandeur est indiqué par un segment au dessus de la grandeur considérée.

Le procédé selon l'invention permet de déterminer la position angulaire $\theta$ et la vitesse $\omega$ d'un rotor d'une machine électrique synchrone, ladite machine électrique étant pourvue de moyens de mesure de tension et de courant des phases de ladite machine électrique. Le procédé selon l'invention est adapté pour déterminer la position $\theta$ et la vitesse $\omega$ du rotor en particulier à faible régime ou lors de l'arrêt de la machine électrique. On peut considérer les faibles régimes pour des vitesses de rotation de la machine électrique inférieure ou sensiblement égale à 100 tr/min. Pour les autres régimes, les observateurs selon l'invention peuvent être moins précis. Pour palier cet inconvénient, on peut alors utiliser pour ces régimes un autre algorithme, par exemple celui décrit dans la demande de brevet du demandeur dont le numéro de dépôt est FR 11/03994.

La figure 2 décrit les différentes étapes du procédé selon l'invention :

1) construction d'une modélisation d'état du flux (MOD($\chi$))
2) construction d'observateurs d'état des courants et de la vitesse (OBS($\hat{x}, \hat{\omega}$))
3) estimation de la position au moyen d'un filtrage (FIL)

Préalablement à ces étapes, on mesure les courants $i$ et tensions $u$ dans les phases de la machine électrique.

La machine électrique synchrone est commandée en couple par un contrôle des tensions et des courants d'alimentation des phases de la machine électrique synchrone. Afin de piloter de manière optimale ce moteur il est nécessaire de mesurer les tensions $u_m$ aux bornes des phases et les courants $i_m$ y circulant.

## 1) construction d'une modélisation d'état du flux (MOD($\chi$))

A l'aide des informations mesurées voire filtrées, il est possible de reconstruire le flux magnétique total. Il s'agit du flux magnétique vu par la machine électrique, à savoir le flux des aimants, plus le flux dû à la réaction magnétique d'induit (c'est-à-dire dû au rotor) pour une machine électrique synchrone à pôles saillants. La reconstruction du flux magnétique est permise par l'utilisation d'une représentation de la dynamique du flux.

Selon un mode de réalisation de l'invention, la modélisation d'état du flux magnétique est construite en réalisant les étapes suivantes :

$$u_{\alpha\beta} = \begin{pmatrix} u_\alpha \\ u_\beta \end{pmatrix} \qquad i_{\alpha\beta} = \begin{pmatrix} i_\alpha \\ i_\beta \end{pmatrix}$$

i) on détermine les tensions $u_{\alpha\beta}$ et courants $i_{\alpha\beta}$ dans le repère de Concordia par transformation des tensions et courants mesurés. On rappelle que la transformée de Concordia est un outil mathématique utilisé en électrotechnique afin de modéliser un système triphasé grâce à un modèle diphasé.

ii) la représentation d'état du flux dans le repère de Concordia s'écrit : $\dot{\chi}_{\alpha\beta} = -Ri_{\alpha\beta} + u_{\alpha\beta}$. Cette loi découle de la loi de Joule/Faraday.

$$\chi_{\alpha\beta} = \begin{pmatrix} \chi_\alpha \\ \chi_\beta \end{pmatrix}$$

Par ailleurs, $\chi_{\alpha\beta}$ est un vecteur de dimension deux qui représente le flux magnétique total vu par les enroulements du moteur et qui n'est ni connu, ni mesuré. Il peut se mettre sous la forme suivante :

$$\chi_{\alpha\beta} = \lambda \begin{pmatrix} i_\alpha \\ i_\beta \end{pmatrix} + \Phi \begin{pmatrix} \cos(\theta) \\ \sin(\theta) \end{pmatrix} + \eta \begin{pmatrix} \cos(2\theta) & \sin(2\theta) \\ \sin(2\theta) & -\cos(2\theta) \end{pmatrix} \begin{pmatrix} i_\alpha \\ i_\beta \end{pmatrix}$$

avec $\Phi$ le flux créé par les aimants permanents, les

paramètres $\lambda = \dfrac{(L_d + L_q)}{2}$ et $\eta = \dfrac{(L_d - L_q)}{2}$ dépendant des inductances directe et en quadrature ($L_d, L_q$).

## 2) construction d'observateurs d'état des courants et de la vitesse (OBS($\hat{x}, \hat{\omega}$))

Lors de cette étape, on construit les observateurs d'état des courants et de la vitesse au moyen de la modélisation d'état du flux déterminé à l'étape précédente ainsi que des mesures de tensions et de courants. En automatique et en théorie de l'information, un observateur d'état est une extension d'un modèle représenté sous forme de représentation d'état. Lorsque l'état d'un système n'est pas mesurable, on construit un observateur qui permet de reconstruire l'état à partir d'un modèle du système dynamique et des mesures d'autres grandeurs ($i_m, u_m$).

Selon un mode de réalisation de l'invention, on construit lesdits observateurs d'état des courants et de la vitesse du rotor en mettant en oeuvre les étapes suivantes :

i)on détermine une représentation d'état du courant $i_{\alpha\beta}$ à partir de la représentation d'état du flux magnétique $\chi_{\alpha\beta}$ et de l'expression du flux magnétique par une formule du type :

$$i_{\alpha\beta} = -\sigma B \begin{pmatrix} \cos(\psi) & -\sin(\psi) \\ \sin(\psi) & \cos(\psi) \end{pmatrix} i_{\alpha\beta} + \sigma A Q(2\theta + \varphi) i_{\alpha\beta} + \frac{\Phi\omega}{\lambda - \eta} \begin{bmatrix} \sin\theta \\ -\cos\theta \end{bmatrix} + \frac{\lambda}{\lambda^2 - \eta^2} I u_{\alpha\beta} - \eta Q(2\theta) u_{\alpha\beta}$$

$$\lambda = \frac{(L_d + L_q)}{2} \quad \text{et} \quad \eta = \frac{(L_d - L_q)}{2}$$

avec $\Phi$ le flux créé par les aimants permanents de ladite machine électrique, , $(L_d, L_q)$ étant les inductances directe et en quadrature de ladite machine électrique,

$$Q(\cdot) = \begin{bmatrix} \cos(\cdot) & \sin(\cdot) \\ \sin(\cdot) & -\cos(\cdot) \end{bmatrix}, \qquad I = \begin{bmatrix} 1 & 0 \\ 0 & 1 \end{bmatrix} \quad \text{et} \quad \sigma = \frac{1}{\lambda^2 - \eta^2}$$

, $A = 4\lambda^2\eta^2\omega^2 + R^2\eta^2$, $B = 4\eta^4\omega^2 + R^2\lambda^2$,

$$\cos\psi = \frac{R\lambda}{B}, \sin\psi = \frac{2\omega\eta^2}{B}, \quad \cos\varphi = \frac{R\eta}{A}, \sin\varphi = \frac{-2\omega\lambda\eta}{A} \quad ;$$

ii) on transforme la représentation d'état dans le plan complexe en posant $x = i_\alpha + j i_\beta$ et $u = u_\alpha + j u_\beta$ avec j le nombre complexe, le modèle équivalent peut prendre alors la forme suivante : $\dot{x} = \alpha \cdot x + \beta \cdot e^{j2\theta} \cdot \bar{x} + \gamma \cdot e^{j\theta} + \delta \cdot u + \varepsilon \cdot e^{j2\theta} \cdot \bar{u}$ avec

$$\alpha = -\sigma B e^{j\psi}, \beta = \sigma A e^{j\varphi}, \gamma = \frac{-j\omega\Phi}{\lambda - \eta}, \delta = \sigma\lambda, \varepsilon = -\sigma\eta \quad ; \text{ et}$$

iii) étant donné que le modèle étudié est un système périodique, la solution des équations différentielles peuvent

$$x(t) = a_1 \cdot e^{j\theta} + c_1 \cdot e^{j\theta_c} + c_2 \cdot e^{j(2\theta - \theta_c)}$$

être exprimées sous la forme suivante: avec

$$\dot{a}_1 = (\alpha - j\omega)a_1 + \beta\bar{a}_1 + \gamma$$
$$\dot{c}_1 = (\alpha - j\omega_c)c_1 + \beta\bar{c}_2 + \delta U_c \qquad . \ \theta_c$$
$$\dot{c}_2 = (\alpha - (2\omega - \omega_c)j)c_2 + \beta\bar{c}_1 + \varepsilon U_c \qquad \text{est la position liée à la tension imposée } u_{imp} \text{ à la machine élec-}$$

trique, de telle sorte que $\dot{\theta}_c = \omega_c = 2\pi f_c$. On peut donc déterminer les observateurs d'états du courant et de la vitesse

$$\dot{\hat{x}} = j\hat{\omega}\hat{x} + (-k_1 + jk_2)(\hat{x} - y_n)$$
$$\dot{\hat{\omega}} = g \cdot \text{Im}(\hat{x}(\overline{\hat{x} - y_n}))$$

du rotor (ou de la fréquence électrique) par des équations du type : avec

$$y_n = \frac{x}{\|x\|}$$

étant les mesures de courants normalisés et $k_1$, $k_2$, $g$ des gains permettant de gérer la convergence de l'observateur.

### 3) estimation de la position au moyen d'un filtrage (FIL)

Lors de cette étape, on détermine la position du rotor au moyen de l'observateur d'état de la vitesse de rotation, du courant mesuré ainsi qu'à partir de la tension imposée.

Selon un mode de réalisation de l'invention, on utilise l'estimation de la vitesse $\hat{\omega}$ pour déterminer les paramètres $a_1, c_1, c_2$. En régime stabilisé, on obtient donc des équations du

$$\hat{a}_1 = -\frac{L_q \Phi \,\hat{\omega}^2}{R^2 + \hat{\omega}^2 L_d L_q} - j\frac{R\Phi\hat{\omega}}{R^2 + \hat{\omega}^2 L_d L_q}$$

type:

$$\hat{c}_1 = \frac{-jU_c(\lambda(2\hat{\omega} - \omega_c) + jR)}{\omega_c(\lambda^2 - \eta^2)(2\hat{\omega} - \omega_c) + R^2 + j2R\lambda(\omega_c - \hat{\omega})}$$

$$\hat{c}_2 = \frac{jU_c L_1(\hat{\omega} - \omega_c)}{\omega_c(\lambda^2 - \eta^2)(\omega_c - 2\hat{\omega}) - R^2 + j2R\lambda(\omega_c - \hat{\omega})}$$

A partir de ce système, on peut déterminer le paramètre $c_2$.

L'étape finale pour obtenir l'estimation de la position du rotor consiste à filtrer les courants mesurés (et non les courants estimés) après les avoir multipliés par le terme $e^{j\theta_c}$, ainsi on forme un filtre passe-bande, filtrant les hautes fréquences, par conséquent filtrant les fréquences $f_c$ engendrées par la tension imposée. Dans ces conditions la sortie du filtre peut s'écrire : $[e^{j\theta_c \cdot x(t)}]_F = c_2 \cdot e^{j(2\theta + \phi)}$ avec $\phi$ le déphasage induit par le filtre, ce déphasage est connu. Ainsi l'estimation de la position angulaire $\theta$ du rotor de la machine électrique peut être calculée par une formule du type :

$$\hat{\theta} = \frac{1}{2}(angle(x) - angle(\hat{c}_2) - \phi)$$

. Le déphasage dépend de la fréquence fondamentale du signal d'entrée, notamment des courants selon un mode de réalisation de l'invention.

Le procédé selon l'invention peut être combiné avec le procédé décrit dans la demande de brevet du demandeur dont le numéro de dépôt est FR 11/03994 : pour les bas régimes (par exemple <100 tr/min), on applique le procédé selon l'invention, pour les autres régimes (par exemple >100 tr/min) on applique le procédé de la demande de brevet antérieure.

Toutes les étapes du procédé sont exécutées par des moyens informatiques, notamment par un contrôleur de la machine électrique. Ainsi, on peut déterminer en temps réel la position et la vitesse du rotor. En effet, un des avantages du procédé selon l'invention est qu'il est facile à implémenter en ligne et donc on pourra facilement l'intégrer dans un calculateur de véhicule électrique / hybride.

L'invention concerne également un procédé de commande d'une machine électrique synchrone, pour lequel on réalise les étapes suivantes :

- on détermine la position $\theta$ et la vitesse $\omega$ du rotor de ladite machine électrique à l'aide du procédé décrit ci-dessus, en injectant la tension imposée $u_{imp}$ telle que décrite ci-dessus ; et
- on contrôle le couple de ladite machine synchrone en fonction de la position $\theta$ et de la vitesse déterminée $\omega$. Pour cette étape, on peut utiliser tout moyen classique de contrôle vectoriel du couple de la machine électrique, qui prend en en compte en plus de la position et de la vitesse du rotor, les tensions et courants mesurés. La prise en compte de la position et de la vitesse pour la commande de la machine électrique permet de déterminer précisément le comportement de la machine électrique, ce qui permet de réaliser une commande adaptée à son fonctionnement.

En outre, l'invention concerne un système de commande d'une machine électrique synchrone adapté à appliquer le procédé tel que décrit ci-dessus. Un tel système de commande (1) de machine électrique (4) est illustré en figure 1. Les moyens de contrôle (1) de la machine électrique sont constitués de moyens de détermination (2) de la position et de la vitesse du rotor de la machine électrique (4) et de moyens de contrôle du couple (3) de la machine électrique (4). Les moyens de détermination (2) déterminent la position et la vitesse du rotor de la machine électrique (4) à partir des mesures de courants $i_m$ et de tensions $u_m$. Il s'agit des courants et des tensions de chacune des trois phases de la machine électrique (4). Les moyens de contrôle du couple (3) appliquent des tensions aux bornes du moteur en fonction des températures internes, de la vitesse $\omega$ et de courants $i_m$ et de tensions $u_m$ afin d'assurer une consigne de couple pour la machine électrique (4).

Ce système de commande, peut être utilisé pour une machine électrique synchrone embarquée à bord d'un véhicule, notamment à bord d'un véhicule automobile électrique ou hybride. Toutefois, le système de commande décrit n'est pas limité à cette application et convient pour toutes les applications des machines électriques synchrones.

**Revendications**

1. Procédé de détermination de la position $\theta$ d'un rotor d'une machine électrique (4) synchrone à pôles saillants, dans lequel on mesure les courants $i_m$ et les tensions $u_m$ des phases de ladite machine électrique, comprenant les étapes suivantes :

   a) on impose une tension $u_{imp}$ auxdites phases de ladite machine électrique (4) qui possède une amplitude $U_c$ supérieure à une tension de commande de ladite machine électrique (4), et une fréquence $f_c$ élevée, supérieure à une fréquence de commande de ladite machine électrique (4) ;
   b) on construit une modélisation d'état du flux magnétique $\chi_{\alpha\beta}$ total circulant dans ladite machine électrique (4), ledit flux magnétique $\chi_{\alpha\beta}$ étant fonction de la position dudit rotor ;
   c) on construit un observateur d'état des courants $\hat{x}$ et de la vitesse $\hat{\omega}$ dudit rotor au moyen de ladite modélisation d'état du flux magnétique $\chi_{\alpha\beta}$ et desdits courants $i_m$ et desdites tensions $u_m$ mesurés ; et
   d) on détermine ladite position $\hat{\theta}$ du rotor au moyen dudit observateur d'état de la vitesse $\hat{\omega}$ et de ladite tension imposée $u_{imp}$ .

2. Procédé selon la revendication 1, dans lequel le procédé est appliqué pour une vitesse de rotation du rotor inférieure ou sensiblement égale à 100 tr/min.

3. Procédé selon la revendication 2, dans lequel ladite amplitude $U_c$ vaut sensiblement 10 V et ladite fréquence $f_c$ vaut sensiblement 1 kHz.

4. Procédé selon l'une des revendications 2 ou 3, dans lequel la tension imposée $u_{imp}$ dans le plan complexe s'écrit par une formule du type : $u_{imp} = U_c e^{j\theta_c}$ avec j le nombre complexe, $\theta_c$ la position telle que $\dot{\theta}_c = 2\pi f_c$.

5. Procédé selon l'une des revendications précédentes, dans lequel on construit ladite modélisation d'état du flux magnétique $\chi_{\alpha\beta}$ total circulant dans la machine électrique (4) est obtenue les étapes suivantes :

   i) on détermine les tensions $u_{\alpha\beta}$ et courants $i_{\alpha\beta}$ dans le repère de Concordia par transformation des tensions $u_m$ et courants $i_m$ mesurés ;
   ii) on détermine ledit la dynamique du flux magnétique $\chi_{\alpha\beta}$ par une équation du type : $\dot{\chi}_{\alpha\beta} = -Ri_{\alpha\beta} + u_{\alpha\beta}$ avec R la résistance des enroulements de ladite machine électrique (4).

6. Procédé selon la revendication 5, dans lequel on construit lesdits observateurs d'état des courants et de la vitesse du rotor au moyen des étapes suivantes :

   i) on détermine une représentation d'état du courant $i_{\alpha\beta}$ à partir de ladite modélisation d'état dudit flux magnétique $\chi_{\alpha\beta}$ par une formule du type :

$$\dot{i}_{\alpha\beta} = -\sigma B \begin{pmatrix} \cos(\psi) & -\sin(\psi) \\ \sin(\psi) & \cos(\psi) \end{pmatrix} i_{\alpha\beta} + \sigma A Q(2\theta + \varphi) i_{\alpha\beta} + \frac{\Phi\omega}{\lambda - \eta}\begin{bmatrix} \sin\theta \\ -\cos\theta \end{bmatrix} + \frac{\lambda}{\lambda^2 - \eta^2} I u_{\alpha\beta} - \eta Q(2\theta) u_{\alpha\beta}$$

$$\lambda = \frac{(L_d + L_q)}{2} \quad \text{et} \quad \eta = \frac{(L_d - L_q)}{2}$$

avec $\Phi$ le flux créé par les aimants permanents de ladite machine électrique, , $(L_d, L_q)$ étant les inductances directe et en quadrature de ladite machine électrique,

$$Q(\cdot) = \begin{bmatrix} \cos(\cdot) & \sin(\cdot) \\ \sin(\cdot) & -\cos(\cdot) \end{bmatrix}, \quad I = \begin{bmatrix} 1 & 0 \\ 0 & 1 \end{bmatrix} \quad \text{et} \quad \sigma = \frac{1}{\lambda^2 - \eta^2}$$

, $A = 4\lambda^2\eta^2\omega^2 + R^2\eta^2$, $B = 4\eta\omega^2 + R^2\lambda^2$,

$$\cos\psi = \frac{R\lambda}{B}, \sin\psi = \frac{2\omega\eta^2}{B} \quad \cos\varphi = \frac{R\eta}{A}, \sin\varphi = \frac{-2\omega\lambda\eta}{A} \ ;$$

   ii) on transforme ladite représentation d'état dans le plan complexe en posant $x = i_\alpha + ji_\beta$ et $u = u_\alpha + ju_\beta$ avec j le nombre complexe ; et

iii) on détermine lesdits observateurs d'états du courant et de la vitesse du rotor par des équations du type :

$$\dot{\hat{x}} = j\hat{\omega}\hat{x} + (-k_1 + jk_2)(\hat{x} - y_n)$$
$$\dot{\hat{\omega}} = g \cdot \mathrm{Im}(\hat{x}(\overline{\hat{x} - y_n}))$$

avec $y_n = \dfrac{x}{\|x\|}$ étant les mesures de courants normalisés et $k_1$, $k_2$, $g$ des gains permettant de gérer la convergence dudit observateur.

7. Procédé selon les revendications 4 et 6, dans lequel on détermine la position $\hat{\theta}$ dudit rotor au moyen des étapes suivantes :

i) on détermine un coefficient $\hat{c}_2$ à partir dudit observateur d'état de la vitesse $\hat{\omega}$ et de ladite tension imposée

$$\hat{c}_2 = \frac{jU_c L_1(2\hat{\omega} - \omega_c)}{\omega_c(\lambda^2 - \eta^2)(\omega_c - 2\hat{\omega}) - R^2 + j2R\lambda(\omega_c - \dfrac{\hat{\omega}}{2})}$$

$u_{imp}$ au moyen d'une équation du type : avec $\omega_c = 2\pi f_c$ ; et

ii) on détermine ladite position $\hat{\theta}$ dudit rotor au moyen du coefficient $\hat{c}_2$ et de courants x mesurés à partir d'une

$$\hat{\theta} = \frac{1}{2}(angle(x) - angle(\hat{c}_2) - \phi)$$

équation du type: avec $\phi$ le déphasage induit par un filtrage passe bas de fréquence de coupure $f_c$ du courant estimé $\hat{x}$.

8. Procédé de commande d'une machine électrique synchrone (4), **caractérisé en ce qu'**on réalise les étapes suivantes :

- on détermine la position $\hat{\theta}$ et la vitesse $\hat{\omega}$ du rotor de ladite machine électrique au moyen du procédé selon l'une des revendications précédentes ; et
- on commande le couple de ladite machine synchrone en fonction de la position et de la vitesse déterminées.

9. Système de commande d'une machine électrique synchrone (4), **caractérisé en ce qu'**il est adapté à appliquer le procédé de commande selon la revendication 8.

10. Véhicule, notamment véhicule automobile hybride ou électrique, comprenant au moins une machine électrique synchrone (4), **caractérisé en ce qu'**il comprend en outre un système de commande selon la revendication 9.

**Patentansprüche**

1. Verfahren zur Bestimmung der Position $\theta$ eines Rotors einer elektrischen Synchron-Schenkelpolmaschine (4), wobei die Ströme $i_m$ und die Spannungen $u_m$ der Phasen der elektrischen Maschine gemessen werden, das die folgenden Schritte enthält:

a) den Phasen der elektrischen Maschine (4) wird eine Spannung $u_{imp}$ vorgegeben, die eine Amplitude $U_c$ höher als eine Steuerspannung der elektrischen Maschine (4) und eine hohe Frequenz $f_c$ höher als eine Steuerfrequenz der elektrischen Maschine (4) besitzt;
b) es wird eine Zustandsmodellierung des in der elektrischen Maschine (4) fließenden Gesamtmagnetflusses $\chi_{\alpha\beta}$ konstruiert, wobei der Magnetfluss $\chi_{\alpha\beta}$ von der Position des Rotors abhängt;
c) ein Zustandsbeobachter der Ströme $\hat{x}$ und der Geschwindigkeit $\hat{\omega}$ des Rotors wird mittels der Zustandsmodellierung des Magnetflusses $\chi_{\alpha\beta}$ und der gemessenen Ströme $i_m$ und Spannungen $u_m$ konstruiert; und
d) die Position $\hat{\theta}$ des Rotors wird mittels des Zustandsbeobachters der Geschwindigkeit $\hat{\omega}$ und der vorgegebenen Spannung $u_{imp}$ bestimmt.

2. Verfahren nach Anspruch 1, wobei das Verfahren für eine Drehgeschwindigkeit des Rotors niedriger als oder im Wesentlichen gleich 100 U/min angewendet wird.

3. Verfahren nach Anspruch 2, wobei die Amplitude $U_c$ im Wesentlichen 10 V und die Frequenz $f_c$ im Wesentlichen 1 kHz beträgt.

4. Verfahren nach einem der Ansprüche 2 oder 3, wobei die vorgegebene Spannung $u_{imp}$ in der komplexen Ebene durch eine Formel der Art: $u_{imp} = U_c e^{j\theta_c}$ geschrieben wird, mit j der komplexen Zahl, $\theta_c$ der Position derart, dass gilt $\dot{\theta}_c = 2\pi f_c$.

5. Verfahren nach einem der vorhergehenden Ansprüche, wobei die Zustandsmodellierung des in der elektrischen Maschine (4) fließenden Gesamtmagnetflusses $\chi_{\alpha\beta}$ mittels ist erhalten mittels der folgenden Schritte:

   i) die Spannungen $u_{\alpha\beta}$ und Ströme $i_{\alpha\beta}$ im Concordia-Koordinatensystem werden durch Transformation der gemessenen Spannungen $u_m$ und Ströme $i_m$ bestimmt;
   ii) die Dynamik des Magnetflusses $\chi_{\alpha\beta}$ wird durch eine Gleichung des Typs $\dot{\chi}_{\alpha\beta} = Ri_{\alpha\beta} + u_{\alpha\beta}$ bestimmt, mit R dem Widerstand der Wicklungen der elektrischen Maschine (4) .

6. Verfahren nach Anspruch 5, wobei die Zustandsbeobachter der Ströme und der Geschwindigkeit des Rotors mittels der folgenden Schritte konstruiert werden:

   i) eine Zustandsdarstellung des Stroms $i_{\alpha\beta}$ wird ausgehend von der Zustandsmodellierung des Magnetflusses $\chi_{\alpha\beta}$ durch eine Formel folgenden Typs bestimmt:

$$i_{\alpha\beta} = -\sigma B \begin{pmatrix} cos(\psi) & -sin(\psi) \\ sin(\psi) & cos(\psi) \end{pmatrix} i_{\alpha\beta} + \sigma A Q(2\theta + \varphi) i_{\alpha\beta} + \frac{\Phi\omega}{\lambda - \eta} \begin{bmatrix} sin\theta \\ -cos\theta \end{bmatrix}$$
$$+ \frac{\lambda}{\lambda^2 - \eta^2} I u_{\alpha\beta} - \eta Q(2\theta) u_{\alpha\beta}$$

mit $\Phi$ dem von den Dauermagneten der elektrischen Maschine erzeugten Fluss, $\lambda = \frac{(L_d + L_q)}{2}$ und

$\eta = \frac{(L_d - L_q)}{2}$ , wobei ($L_d$, $L_q$) die Direkt- und Quadraturinduktivitäten der elektrischen Maschine sind,

$Q(\cdot) = \begin{bmatrix} cos(\cdot) & sin(\cdot) \\ sin(\cdot) & -cos(\cdot) \end{bmatrix}$, $I = \begin{bmatrix} 1 & 0 \\ 0 & 1 \end{bmatrix}$ und $\sigma = \frac{1}{\lambda^2 - \eta^2}$, $A = 4\lambda^2\eta^2\omega^2 + R^2\eta^2$, $B = 4\eta^4\omega^2 + R^2\lambda^2$, $cos\psi = \frac{R\lambda}{B}, sin\psi = \frac{2\omega\eta^2}{B}$, $cos\varphi = \frac{R\eta}{A}, sin\varphi = \frac{-2\omega\lambda\eta}{A}$ ;

ii) die Zustandsdarstellung in der komplexen Ebene wird transformiert, indem gesetzt wird $x = i_\alpha + ji_\beta$ und $u = u_\alpha + ju_\beta$ mit j der komplexen Zahl; und
iii) die Zustandsbeobachter des Stroms und der Geschwindigkeit des Rotors werden durch Gleichungen folgenden Typs bestimmt:

$$\dot{\hat{x}} = j\hat{\omega}\hat{x} + (-k_1 + jk_2)(\hat{x} - y_n)$$

$$\dot{\hat{\omega}} = g \cdot Im\left(\hat{x}(\overline{\hat{x} - y_n})\right)$$

wobei $y_n = \frac{\chi}{\|\chi\|}$ yn die Messungen normierter Ströme und $k_1$, $k_2$, g Verstärkungen sind, die es ermöglichen, die Konvergenz des Beobachters zu verwalten.

7. Verfahren nach den Ansprüchen 4 und 6, wobei die Position $\hat{\theta}$ des Rotors mittels der folgenden Schritte bestimmt wird:

i) ausgehend vom Zustandsbeobachter der Geschwindigkeit $\hat{\omega}$ und der vorgegebenen Spannung $u_{imp}$ wird

$$\hat{c}_2 = \frac{jU_cL_1(2\hat{\omega}-\omega_c)}{\omega_c(\lambda^2-\eta^2)(\omega_c-2\hat{\omega})-R^2+j2R\lambda\left(\omega_c-\frac{\hat{\omega}}{2}\right)}$$

mittels einer Gleichung des Typs: $\qquad$ mit $\omega_c = 2\pi f_c$ ein Koeffizient $\hat{c}_2$ bestimmt; und

ii) die Position $\hat{\theta}$ des Rotors wird mittels des Koeffizienten $\hat{c}_2$ und gemessenen Strömen x ausgehend von einer

$$\hat{\theta} = \frac{1}{2}(Winkel(x) -$$

Gleichung des Typs: $\qquad$ $Winkel(\hat{c}_2)$-$\phi$) bestimmt, mit $\phi$ der durch eine Tiefpassfilterung einer Abschaltfrequenz $f_c$ des geschätzten Stroms $\hat{x}$ induzierten Phasenverschiebung.

8. Steuerverfahren einer elektrischen Synchronmaschine (4), **dadurch gekennzeichnet, dass** die folgenden Schritte durchgeführt werden:

- die Position $\hat{\theta}$ und die Geschwindigkeit $\hat{\omega}$ des Rotors der elektrischen Maschine werden mittels des Verfahrens nach einem der vorhergehenden Ansprüche bestimmt; und
- das Drehmoment der Synchronmaschine wird abhängig von der bestimmten Position und der bestimmten Geschwindigkeit gesteuert.

9. Steuersystem einer elektrischen Synchronmaschine (4), **dadurch gekennzeichnet, dass** es geeignet ist, das Steuerverfahren nach Anspruch 8 anzuwenden.

10. Fahrzeug, insbesondere Hybrid- oder Elektro-Kraftfahrzeug, das mindestens eine elektrische Synchronmaschine (4) enthält, **dadurch gekennzeichnet, dass** es außerdem ein Steuersystem nach Anspruch 9 enthält.

## Claims

1. Method for determining the position $\theta$ of a rotor of a salient-pole synchronous electric machine (4), in which method the currents $i_m$ and voltages $u_m$ of the phases of said electric machine are measured, said method comprising the following steps:

a) a voltage $u_{imp}$ is applied to said phases of said electric machine (4), which voltage possesses an amplitude $U_c$ higher than a control voltage of said electric machine (4), and a high frequency $f_c$ above a control frequency of said electric machine (4);
b) a state model of the total magnetic flux $\chi_{\alpha\beta}$ passing through said electric machine (4) is constructed, said magnetic flux $\chi_{\alpha\beta}$ being dependent on the position of said rotor;
c) a state observer for estimating currents $\hat{x}$ and the velocity $\hat{\omega}$ of said rotor is constructed by means of said state model of the magnetic flux $\chi_{\alpha\beta}$ and of said measured currents $i_m$ and said measured voltages $u_m$; and
d) said position $\hat{\theta}$ of the rotor is determined by means of said state observer for estimating velocity $\omega$ and of said applied voltage $u_{imp}$.

2. Method according to Claim 1, wherein the method is applied for a velocity of rotation of the rotor below or substantially equal to 100 rpm.

3. Method according to Claim 2, wherein said amplitude $U_c$ is substantially 10 V and said frequency $f_c$ is substantially 1 kHz.

4. Method according to either of Claims 2 and 3, wherein, in the complex plane, the applied voltage $u_{imp}$ is expressed by the formula: $u_{imp} = U_c e^{j\theta_c}$ with $j$ the imaginary unit, and $\theta_c$ the position such that $\dot{\theta}_c = 2\pi f_c$.

5. Method according to one of the preceding claims, wherein said state model of the total magnetic flux $\chi_{\alpha\beta}$ passing through said electric machine (4) is constructed is obtained by means of the following steps:

i) the voltages $u_{a\beta}$ and currents $i_{a\beta}$ in the Concordia reference frame are determined via transform of the measured currents $i_m$ and voltages $u_m$;

ii) the rate of change of the magnetic flux $\chi_{\alpha\beta}$ is determined using the equation: $\chi_{\alpha\beta}$ = $-Ri_{\alpha\beta}$ $+u_{\alpha\beta}$ with $R$ the resistance of the windings of said electric machine (4).

**6.** Method according to Claim 5, wherein said state observers for estimating the currents and velocity of the rotor are constructed by means of the following steps:

i) a representation of the state of the current $i_{\alpha\beta}$ is determined based on said state model of said magnetic flux $\chi_{\alpha\beta}$ using the formula:

$$i_{\alpha\beta} = -\sigma B \begin{pmatrix} cos(\psi) & -sin(\psi) \\ sin(\psi) & cos(\psi) \end{pmatrix} i_{\alpha\beta} + \sigma AQ(2\theta + \phi)i_{\alpha\beta}$$
$$+ \frac{\Phi\omega}{\lambda - \eta}\begin{bmatrix} sin\theta \\ -cos\theta \end{bmatrix} + \frac{\lambda}{\lambda^2 - \eta^2}Iu_{\alpha\beta} - \eta Q(2\theta)u_{\alpha\beta}$$

with $\Phi$ the flux created by the permanent magnets of said electric machine $\lambda = \frac{(L_d + L_q)}{2}$ and $\eta = \frac{(L_d + L_q)}{2}$, $(L_d, L_q)$ being the direct and quadrature inductances of said electric machine, $Q = \begin{bmatrix} cos(.) & sin(.) \\ sin(.) & -cos(.) \end{bmatrix}$, $I = \begin{bmatrix} 1 & 0 \\ 0 & 1 \end{bmatrix}$ and $\sigma = \frac{1}{\lambda^2 - \eta^2}$, $A = 4\lambda^2\eta^2\omega^2 + R^2\eta^2$, $B = 4\eta^4\omega^2 + R^2\lambda^2$, $cos\psi = \frac{R\lambda}{B}$, $sin\psi = \frac{2\omega\eta^2}{B}$, $cos\phi = \frac{R\eta}{A}$, and $sin\phi = \frac{-2\omega\lambda\eta}{A}$;

ii) said state representation is transformed in the complex plane by setting $x = i_\alpha + ji_\beta$ and $u = u_\alpha + ju_\beta$ with j the imaginary unit; and

iii) said state observers for estimating the current and velocity of the rotor are determined via the equations:

$$\dot{\hat{x}} = j\hat{\omega}\hat{x} + (-k_1 + jk_2)(\hat{x} - y_n)$$
$$\dot{\hat{\omega}} = g \cdot Im\left(\hat{x}(\overline{\hat{x} - y_n})\right)$$

with $y_n = \frac{x}{\|x\|}$ being the current measurements normalized and $k_1$, $k_2$ and $g$ being gains allowing the convergence of said observer to be managed.

**7.** Method according to Claims 4 and 6, wherein the position $\hat{\theta}$ of said rotor is determined by means of the following steps:

i) a coefficient $\hat{c}_2$ is determined based on said state observer for estimating the velocity $\hat{\omega}$ and on said applied voltage $u_{imp}$ by means of the equation: $\hat{c}_2 = \frac{jU_cL_1(2\hat{\omega} - \omega_c)}{\omega_c(\lambda^2 - \eta^2)(\omega_c - 2\hat{\omega}) - R^2 + j2R\lambda\left(\omega_c - \frac{\hat{\omega}}{2}\right)}$ with $\omega_c = 2\pi f_c$; and

ii) said position $\hat{\theta}$ of said rotor is determined by means of the coefficient $\hat{c}_2$ and of measured currents x based on the equation $\hat{\theta} = \frac{1}{2}(angle(x) - angle(\hat{c}_2) - \phi)$ with $\phi$ the phase shift induced by applying low-pass filtering of cutoff frequency $f_c$ to the estimated current $\hat{x}$.

**8.** Method for controlling a synchronous electric machine (4), **characterized in that** the following steps are carried out:

- the position $\hat{\theta}$ and velocity $\hat{\omega}$ of the rotor of said electric machine are determined by means of the method according to one of the preceding claims; and
- the torque of said synchronous machine is controlled depending on the determined position and velocity.

**9.** System for controlling a synchronous electric machine (4), **characterized in that** it is able to apply the control method according to Claim 8.

**10.** Vehicle, especially a hybrid or electric vehicle, comprising at least one synchronous electric machine (4), **characterized in that** it further comprises a control system according to Claim 9.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1214331 A
- FR 2623033 A1
- FR 2781318 B1
- US 2010237817 A
- WO 13093223 A2
- US 5296793 A
- EP 1959553 A1
- FR 1103994